# EUROPÄISCHE PATENTSCHRIFT

(11) **EP 1 975 468 B1**
(45) Veröffentlichungstag und Bekanntmachung des Hinweises auf die Patenterteilung: **22.06.2011**
(21) Anmeldenummer: 08005704.5
(22) Anmeldetag: 26.03.2008
(51) Int. Cl.: F16H 57/02, F16C 17/02, F16H 25/20

(54) **Loslager und Gewindetrieb mit einem derartigen Loslager**
Movable bearing and thread drive with such a movable bearing
Palier libre et vis de réglage dotée d'un tel palier libre

(30) Priorität: 30.03.2007 DE 202007004692 U
(43) Veröffentlichungstag der Anmeldung: 01.10.2008
(73) Patentinhaber: Robert Bosch GmbH, 70469 Stuttgart (DE)
(72) Erfinder: Keller,Bernhard, 97535 Wasserlosen-Kaisten (DE); Hoherz, Roland, 97490 Kützberg (DE)
(74) Vertreter: Maiß, Harald

(56) Entgegenhaltungen:
- DE-A1- 4 010 564
- DE-A1- 10 222 522
- DE-C1- 19 824 839
- GB-A- 478 918
- US-A1- 2006 213 298
- US-B1- 6 467 965

## Beschreibung

Die Erfindung betrifft ein Loslager zur Lagerung eines freien Endes einer sich in Richtung einer Längsachse erstreckenden Gewindespindel eines Gewindetriebs, wobei das Loslager eine in einem Lagergehäuse aufgenommene Lagerbuchse umfasst.

Ein derartiges Loslager ist beispielsweise aus der US 2006/0213298 A1 bekannt. Dieses Loslager ist als Gleitlager mit einer Gleitbuchse ausgebildet und in eine zugehörige Vertiefung eines die Gewindespindel aufnehmenden Gehäuses eingesetzt. Nachteilig an dieser Anordnung ist, dass die Gleitbuchse sich in der Vertiefung um ihre Längsachse bzw. die Längsachse der Gewindespindel frei drehen kann.

DE 10222522 wird als nächster Stand der Technik angesehen und offenbart die Merkmale des Oberbegriff des Anspruchs 1.

Aus der DE 102 22 522 A1 ist ein Gewindetrieb in Form eines Kugelgewindetriebs bekannt. Auf der vom Antriebszapfen abgewandten Seite der Gewindespindel ist ein Loslager zur drehbaren Lagerung der Gewindespindel vorgesehen, während auf der Seite des Antriebszapfens ein Festlager vorgesehen ist.

Aus der US 6 467 965 B1 ist eine Lagerbuchse zur Lagerung der Welle eines Fotokopiergerätes bekannt. An der Lagerbuchse ist ein in radialer Richtung nach außen abstehender Ansatz vorgesehen, der dazu bestimmt ist in axialer Richtung an einem Lagergehäuse in Form eines Blechbauteils anzuliegen. Die Lagerbuchse ist mittels eines Rastarms lösbar mit dem Lagergehäuse verbunden, wobei der Rastarm über eine zugehörige Ausnehmung mit dem Lagergehäuse verrastet wird. Gemäß einer Ausführungsalternative wird der Rastarm zur formschlüssigen Verdrehsicherung der Lagerbuchse genutzt. Hierbei besteht das Problem, dass der Rastarm sehr leicht abbrechen kann, wenn auf die Lagerbuchse ein Drehmoment, beispielsweise aufgrund der Lagerreibung, einwirkt. Hierbei ist anzumerken, dass die Lagerbuchse aus Kunststoff besteht, so dass sie eine geringe Festigkeit aufweist.

Ferner werden von der Firma IGUS als Gleitlager ausgebildete Loslager vertrieben, welche als geschlitzte Ringe ausgebildet sind, um ihr Einsetzen in eine Durchgangsöffnung eines als Lagergehäuse dienenden Blechteils zu ermöglichen. Auch bei dieser Anordnung ist ein freies Verdrehen der Gleitbuchse möglich.

Demgegenüber ist es Aufgabe der vorliegenden Erfindung, ein Loslager der eingangs genannten Art bereitzustellen, welches in seiner Aufnahmebohrung verdrehfest anordenbar ist.

Diese Aufgabe wird durch ein Loslager der eingangs genannten Art gelöst, bei welchem die Lagerbuchse wenigstens einen in radialer Richtung nach außen abstehenden Vorsprung aufweist, welcher in eine zugehörige Ausnehmung des Lagergehäuses eingreift. Durch das Zusammenwirken des wenigstens einen Vorsprungs und der Ausnehmung kann ein Verdrehen der Lagerbuchse zuverlässig verhindert werden.

Um ein Verdrehen der Lagerbuchse im Wesentlichen vollständig verhindern zu können, wird ferner vorgeschlagen, dass der wenigstens eine Vorsprung die Lagerbuchse in Umfangsrichtung im Wesentlichen spielfrei in der Ausnehmung hält.

Die Lagerbuchse kann wenigstens einen in radialer Richtung nach außen abstehenden Ansatz aufweisen, der dazu bestimmt ist, sich in axialer Richtung an das Lagergehäuse anzulegen. Dieser Ansatz dient der Stabilisierung der Lage der Lagerbuchse in dem Lagergehäuse und kann beispielsweise als Anlagekragen ausgebildet sein.

Um die Lagerbuchse im Falle einer Beschädigung oder eines zu großen Verschleißes ersetzen zu können, kann die Lagerbuchse an dem Gehäuse lösbar befestigbar sein. Hierzu kann die Lagerbuchse beispielsweise einen Rastarm aufweisen, welcher dazu bestimmt ist, an dem Lagergehäuse in einer dem wenigstens einen Ansatz entgegengesetzt wirkenden Richtung anzuliegen. Um das Lösen der Verrastung des Rastarms auch von der ihm abgewandten Seite des Ansatzes her bewerkstelligen zu können, kann neben dem wenigstens einen Vorsprung eine in der Ausnehmung verbleibende Öffnung vorgesehen sein, durch welche der Rastarm zugänglich ist. Durch diese Öffnung kann beispielsweise ein Werkzeug hindurchgeführt werden, welches mit dem Rastarm in Eingriff tritt, um dessen Verrastung mit dem Lagergehäuse zu lösen.

Erfindungsgemäss die Lagerbuchse an das Lagergehäuse angespritzt . Bei diesem Spritzvorgang wird gleichzeitig auch der in die Ausnehmung eingreifende Vorsprung an die Lagerbuchse angeformt. Gemäß dieser Ausführungsvariante ist es zwar nicht möglich, die Lagerbuchse zerstörungsfrei wieder von dem Lagergehäuse zu lösen. Nach ihrer Entfernung ist es jedoch möglich, an ihrer Stelle eine an dem Lagergehäuse lösbar befestigbare Lagerbuchse zu montieren, wie sie vorstehend erläutert worden ist.

In einer konstruktiv einfachen Ausführungsform kann das Lagergehäuse von einem Montageblech gebildet sein, beispielsweise von einem auf einer Basisplatte befestigbaren Winkelblech. Es ist jedoch auch möglich, dass das Lagergehäuse von der Endplatte eines Linearmoduls gebildet ist.

Gemäß einem weiteren Gesichtspunkt betrifft die Erfindung einen Gewindetrieb mit einer sich in Richtung einer Längsachse erstreckenden Gewindespindel, welche an ihrem freien Ende in einem Loslager gelagert ist, welches eine in einem Lagergehäuse aufgenommene Lagerbuchse umfasst, wobei die Lagerbuchse wenigstens einen in radialer Richtung nach außen abstehenden Vorsprung aufweist, welcher in eine zugehörige Ausnehmung des Lagergehäuses eingreift. Auch dieser Wälzkörpergewindetrieb löst aus den vorstehend diskutierten Gründen die vorstehend angegebene Aufgabe.

Die Erfindung wird im Folgenden an zwei Ausführungsbeispielen anhand der beigefügten Zeichnungen näher erläutert werden. Es stellen dar:
- Figur 1: eine Perspektivansicht eines erfindungsgemäßen Loslagers;
- Figur 2: eine Perspektivansicht des Loslagers gemäß Figur 1 aus Blickrichtung des Pfeils II in Figur 1;
- Figur 3: eine Perspektivansicht einer Lagerbuchse des erfindungsgemäßen Loslagers; und
- Figur 4: eine Perspektivansicht einer weiteren Ausführungsform eines erfindungsgemäßen Loslagers.

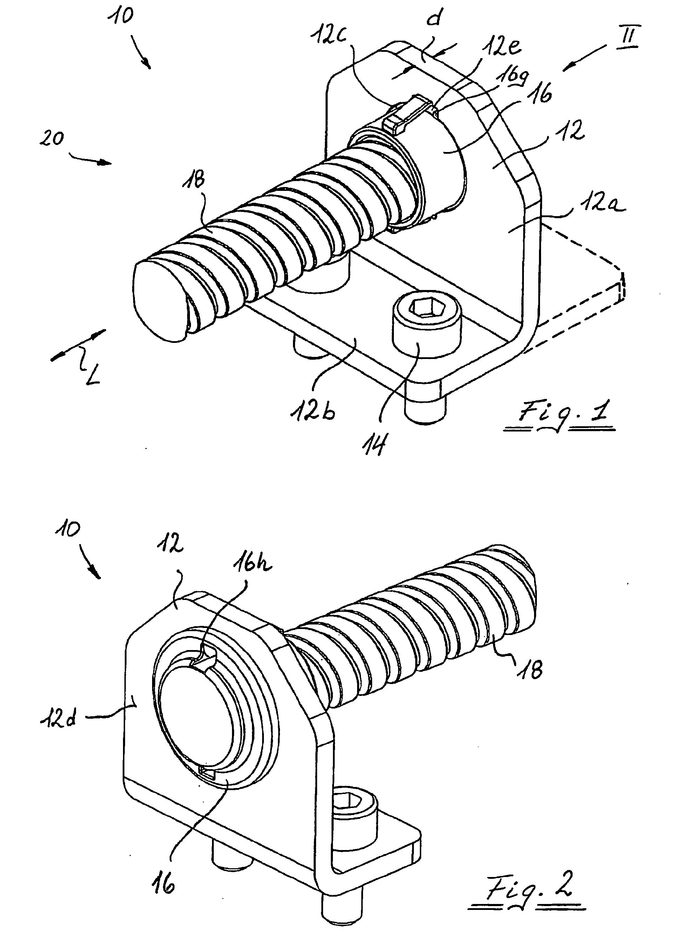

In Figur 1 ist ein erfindungsgemäßes Loslager ganz allgemein mit 10 bezeichnet. Das Loslager 10, das Teil eines Gewindetriebs 20, insbesondere eines Kugelgewindetriebs ist, umfasst ein Lagergehäuse 12, das im vorliegenden Ausführungsbeispiel von einem Winkelblech mit einem Lagerabschnitt 12a und einem Befestigungsabschnitt 12b gebildet ist. Der Befestigungsabschnitt 12b kann über Montageschrauben 14 an einer übergeordneten Baueinheit, beispielsweise einer Montageplatte, befestigt werden. In dem Lagerabschnitt 12a des Lagergehäuses 12 ist ein Durchgang 12c ausgebildet, in welchen eine Lagerbuchse 16 eingesetzt ist. Die Lagerbuchse 16 dient zur Lagerung einer Gewindespindel 18 des Gewindetriebs 20, und zwar zur in deren Längsrichtung L verschiebbaren Lagerung der Gewindespindel 18 sowie zur Lagerung der Gewindespindel 18 in einer zur Längsrichtung L orthogonal verlaufenden Ebene.

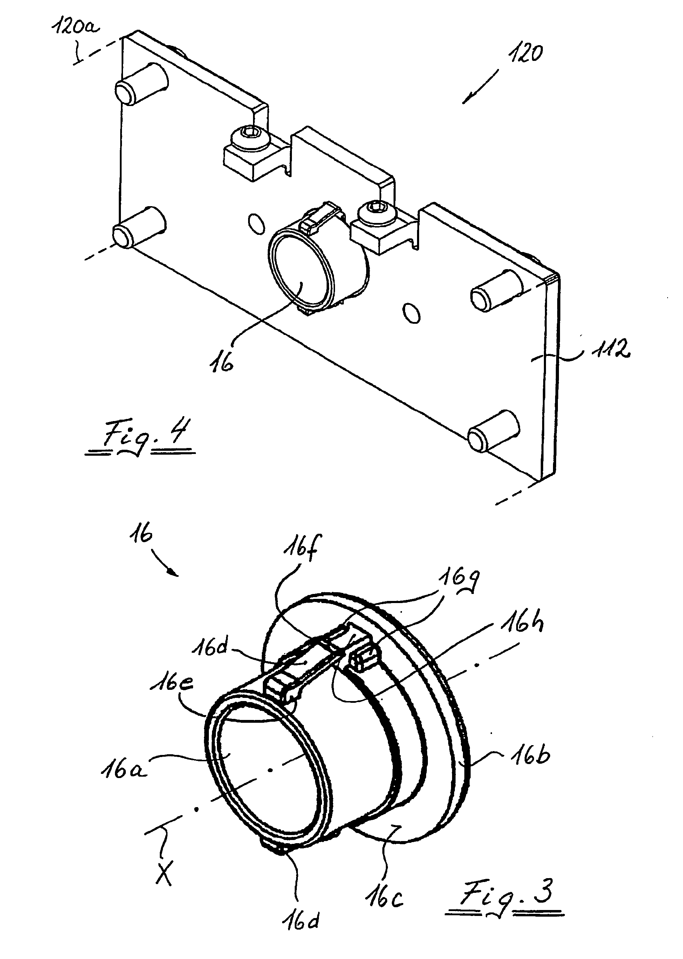

Wie insbesondere in Figur 3 dargestellt ist, umfasst die Lagerbuchse 16, die vorzugsweise als Spritzgussteil aus Kunststoff gefertigt ist, einen zylindrischen Hülsen- bzw. Lagerabschnitt 16a, der die Gewindespindel 18 umgibt. An einem Längsende des Lagerabschnitts 16a bzw. diesem benachbart ist ein sich in radialer Richtung erstreckender Ringansatz 16b vorgesehen, der sich im montierten Zustand gemäß Figuren 1 und 2 mit einer in Längsrichtung L weisenden Ringfläche 16c gegen eine Fläche 12d (siehe Figur 2) des Lagerabschnitts 12a des Lagergehäuses 12 anlegt.

Im Bereich des anderen Längsendes des Lagerabschnitts 16a sind an diesem zwei einander diametral gegenüberliegende Rastarme 16d angeordnet, deren radialer Abstand von der Längsmittelachse X mit zunehmender Entfernung von ihrer Verbindungsstelle 16e mit der Hülse 16a anwächst. Das freie Ende 16f der Rastarme 16d weist von dem Ringansatz 16b einen Abstand auf, der im Wesentlichen der Dicke d (siehe Figur 1) des Lagerabschnitts 12a des Lagergehäuses 12 entspricht.

An zwei einander diametral gegenüberliegenden Stellen sind im Randbereich des Durchgangs 12c zwei Einkerbungen bzw. Ausnehmungen 12e vorgesehen, durch welche die Rastarme 16d durch den Durchgang 12c hindurchtreten können. Die radialen Erstreckungen der Rastarme 16d und der Ausnehmungen 12e sind dabei derart aufeinander abgestimmt, dass die Rastarme 16d beim Durchtritt durch den Durchgang 12c zunächst nach innen gedrückt werden und dann, wenn die Fläche 16c der Lagerbuchse 16 in Anlage an die Fläche 12d des Lagergehäuses 12 gelangt, aufgrund ihrer Eigenelastizität wieder nach außen springen und die Lagerbuchse 16 an dem Lagergehäuse 12 verrasten. In diesem Zustand sind zwei von der Lagerbuchse radial abstehende Stege 16g in der Ausnehmung 12e angeordnet und liegen in Umfangsrichtung um die Achse X im Wesentlichen spielfrei an deren Seitenwänden an. Auf diese Weise ist die Lagerbuchse 16 in dem Lagergehäuse 12 gegen ein unbeabsichtigtes Verdrehen gesichert.

Um die Lagerbuchse 16 auch dann, wenn sie auf Seiten der Rastarme 16d nicht frei zugänglich ist, wieder vom Lagergehäuse 112 lösen zu können, ist in dem Ringansatz 16b eine zu dem Rastarm 16d fluchtende Öffnung 16h vorgesehen, durch welche ein Werkzeug eingeführt werden kann, um einen Zugriff auf den Rastarm 16d gewähren zu können. Die Stege 16g sind dabei auf Seiten der Anlagefläche 16c des Ringsansatzes 16b beidseits der Öffnung 16h angeordnet. Dies ist beispielsweise bei der in Figur 4 dargestellten Ausführungsform der Fall, bei der das Lagergehäuse als Endplatte 112 eines Linearmoduls 120 ausgebildet ist, dessen Modulgehäuse 120a lediglich gestrichelt angedeutet ist.

Nachzutragen ist noch, dass sich der Befestigungsabschnitt 12b des Winkelblechs 12 nicht notwendigerweise in die gleiche Richtung zu erstrecken braucht wie die Gewindespindel 18. Vielmehr ist es auch möglich, dass er sich von dieser weg erstreckt, wie dies in Figur 1 gestrichelt angedeutet ist. Ferner ist es möglich, dass eine Mehrzahl von Befestigungsabschnitten vorgesehen ist, von denen sich wenigstens einer in Richtung der Gewindespindel 18 erstreckt, während sich wenigstens ein anderer in der entgegengesetzten Richtung erstreckt.

## Patentansprüche

1. Loslager (10) zur Lagerung eines freien Endes einer sich in Richtung einer Längsachse (L) erstreckenden Gewindespindel (18) eines Gewindetriebs, wobei das Loslager (10) eine in einem Lagergehäuse (12) aufgenommene Lagerbuchse (16) umfasst,
**dadurch gekennzeichnet, dass** die Lagerbuchse (16) wenigstens einen in radialer Richtung nach aussen abstehenden Vorsprung (16g) aufweist, welcher in eine zugehörige Ausnehmung (12e) des Lagergehäuses (12) eingreift, wobei die Lagerbuchse (16) an das Lagergehäuse (12) angespritzt ist.

2. Loslager nach Anspruch 1,
**dadurch gekennzeichnet, dass** der wenigstens eine Vorsprung (16g) die Lagerbuchse (16) in Umfangsrichtung im Wesentlichen spielfrei in der Ausnehmung (12e) hält.

3. Loslager nach Anspruch 1 oder 2,
**dadurch gekennzeichnet, dass** die Lagerbuchse (16) wenigstens einen in radialer Richtung nach aussen abstehenden Ansatz (16b) aufweist, der dazu bestimmt ist, in axialer Richtung an dem Lagergehäuse (12) anzuliegen.

4. Loslager nach einem der vorstehenden Ansprüche,
**dadurch gekennzeichnet, dass** das Lagergehäuse (12) von einem Montageblech gebildet ist, beispielsweise von einem auf einer Basisplatte befestigbaren Winkelblech.

5. Loslager nach einem der vorstehenden Ansprüche,
**dadurch gekennzeichnet, dass** das Lagergehäuse (112) von der Endplatte eines Linearmoduls gebildet ist.

6. Gewindetrieb (20) mit einer sich in Richtung einer Längsachse (L) erstreckenden Gewindespindel (18), welche an ihrem freien Ende in einem Loslager (10) gelagert ist, welches eine in einem Lagergehäuse (12) aufgenommene Lagerbuchse (16) umfasst,
**dadurch gekennzeichnet, dass** das Loslager (10), insbesondere dessen Lagerbuchse (16), gemäss einem der vorstehenden Ansprüche ausgebildet ist.

7. Gewindetrieb (20) nach Anspruch 6,
**dadurch gekennzeichnet, dass** der Gewindetrieb (20) als Kugelgewindetrieb ausgebildet ist.

## Claims

1. Movable bearing (10) for mounting a free end of a threaded spindle (18), which extends in the direction of a longitudinal axis (L), of a screw drive, the movable bearing (10) comprising a bearing bush (16) which is held in a bearing housing (12),
**characterized in that** the bearing bush (16) has at least one projection (16g) which projects outwards in the radial direction and which engages into an associated recess (12e) of the bearing housing (12), the bearing bush (16) being injection-moulded on the bearing housing (12).

2. Movable bearing according to Claim 1,
**characterized in that** the at least one projection (16g) holds the bearing bush (16) in the recess (12e) substantially without play in the circumferential direction.

3. Movable bearing according to Claim 1 or 2,
**characterized in that** the bearing bush (16) has at least one shoulder (16b) which projects outwards in the radial direction and which is designed to bear against the bearing housing (12) in the axial direction.

4. Movable bearing according to one of the preceding claims,
**characterized in that** the bearing housing (12) is formed by a mounting plate, for example by an angle plate that can be fastened to a base panel.

5. Movable bearing according to one of the preceding claims,
**characterized in that** the bearing housing (112) is formed by the end panel of a linear module.

6. Screw drive (20) having a threaded spindle (18) which extends in the direction of a longitudinal axis (L) and which is mounted at its free end in a movable bearing (10) which comprises a bearing bush (16) which is held in a bearing housing (12),
**characterized in that** the movable bearing (10), in particular the bearing bush (16) thereof, is designed according to one of the preceding claims.

7. Screw drive (20) according to Claim 6,
**characterized in that** the screw drive (20) is designed as a ball screw driver.

## Revendications

1. Palier libre (10) pour le support sur palier d'une extrémité libre d'une broche filetée (18) d'une vis d'entraînement s'étendant dans la direction d'un axe longitudinal (L), le palier libre (10) comprenant une douille palier (16) reçue dans un boîtier de palier (12),
**caractérisé en ce que** la douille palier (16) présente au moins une saillie (16g) saillant vers l'extérieur dans la direction radiale, qui vient en prise dans un évidement associé (12e) du boîtier de palier (12), la douille palier (16) étant moulée sur le boîtier de palier (12).

2. Palier libre selon la revendication 1,
**caractérisé en ce que** l'au moins une saillie (16g) maintient la douille palier (16) dans la direction périphérique essentiellement sans jeu dans l'évidement (12e).

3. Palier libre selon la revendication 1 ou 2,
**caractérisé en ce que** la douille palier (16) présente au moins un épaulement (16b) saillant vers l'extérieur dans la direction radiale, qui est prévu pour s'appliquer dans la direction axiale contre le boîtier de palier (12).

4. Palier libre selon l'une quelconque des revendications précédentes,
**caractérisé en ce que** le boîtier de palier (12) est formé par une tôle de montage, par exemple par une tôle coudée pouvant être fixée sur une plaque de base.

5. Palier libre selon l'une quelconque des revendications précédentes,
**caractérisé en ce que** le boîtier de palier (112) est formé par la plaque de bout d'un module linéaire.

6. Vis d'entraînement (20) comprenant une broche filetée (18) s'étendant dans la direction d'un axe longitudinal (L), laquelle est supportée à son extrémité libre dans un palier libre (10) qui comprend une douille palier (16) reçue dans un boîtier de palier (12),
**caractérisée en ce que** le palier libre (10), en particulier sa douille palier (16), est réalisé selon l'une quelconque des revendications précédentes.

7. Vis d'entraînement (20) selon la revendication 6,
**caractérisée en ce que** la vis d'entraînement (20) est réalisée sous forme de vis d'entraînement à billes (20).
